# EUROPEAN PATENT APPLICATION

(11) **EP 0 876 975 A1**
(43) Date of publication of application: **11.11.1998**
(21) Application number: 98201494.6
(22) Date of filing: 07.05.1998
(51) Int. Cl.: B65G 67/04

(54) **System for transporting rolling containers**

(30) Priority: 07.05.1997 NL 1005997
(71) Applicant: Schepers, Klaas, 7841 GG Sleen (NL); Schutrups, Grietje Gebbegien, 7841 GG Sleen (NL)
(72) Inventor: Schepers, Klaas, 7841 GG Sleen (NL); Schutrups, Grietje Gebbegien, 7841 GG Sleen (NL)
(74) Representative: 't Jong, Bastiaan Jacobus

(57) **Abstract**

This invention relates to a system for transporting goods with rolling containers, comprising a number of rolling containers (2,3,4) provided with wheels (5), pallets (6), each for carrying at least one rolling container (2,3,4), and displacing means for the rolling containers (2,3,4) and pallets (6). Each pallet (6) is herein provided with continuous openings for the vertical passage of parts of the displacing means and with recesses for receiving rolling container wheels (5).

## Description

The invention relates to a system for transporting goods comprising pallets and displacing means for the pallets, wherein each pallet is provided with continuous openings for the vertical passage of parts of the displacing means.

Such a system is known from the German Auslageschrift 1.225.558. The goods for transporting are placed on the pallets and can be transported using fork-lift trucks and/or roller conveyors and the like.

The invention has for its object to further improve such a transport system. This is achieved with the measure as characterized in claim 1. It is hereby possible to place one or a number of rolling containers on a pallet, wherein the wheels are received in the recesses of the pallet. The rolling container(s) can then be displaced in efficient manner using a fork-lift truck. The rolling containers can be placed efficiently on the pallets and removed therefrom by the parts of the displacing means which protrude through the continuous openings in the pallet and engage each rolling container from below and move it relative to the pallet.

The use of rolling containers to transport goods is generally known per se. Due to their good manoeuvrability rolling containers are particularly suitable for the displacement of the goods inside the premises of the producer as well as inside the premises of the end-user, in particular retailers. The drawback associated with the known rolling containers, that they are unwieldy during transport from the producer to the end-user, is obviated with the invention. Use is typically made of trucks for this transport and the rolling containers must each be moved to the relevant truck and loaded therein. At the end-user the rolling container must once again be removed from the truck and moved over a possibly uneven terrain to the location where the transported goods are set out. Since for each rolling container this must be carried out manually each time by one person, it is relatively time-consuming and therefore costly.

With the system according to the invention produced goods can thus be transported directly from the production site to the final destination in very efficient manner, wherein the advantages of the rolling containers can be fully utilized without the drawbacks normally associated therewith.

A suitable embodiment is characterized in claim 2. If a number of smaller rolling containers have to be transported per pallet, the rolling containers can be moved into position on the pallet as long as the pallet is not yet wholly filled, wherein the channels guide the rolling container wheels.

In preference the measure of claim 3 is applied herein. The wheel blocking elements prevent a rolling container moving off the pallet. A suitable embodiment is characterized herein in claim 4.

A suitable embodiment of the pallet is further characterized in claim 5. It is hereby possible to manufacture pallets with comparatively little material so that they can take a light form, which is favourable in the handling of these pallets.

For an efficient utilization of suitable loading space the measure of claim 7 is preferably applied. The surface area taken up by the rolling containers hereby coincides with the surface area of the pallet so that no empty space occurs between a number of adjacently disposed pallets with rolling containers.

It is known to provide rolling containers with at least some swivel castors. In order to prevent the possibility of these lying transversely of the guide channels during placing of a rolling container on the pallet, the measure of claim 8 is favourably applied. Due to the tapering of the guide channels the swivel castors are gradually swivelled in the one or other direction when a rolling container is lowered downward onto the pallet.

Another or additional measure in this respect is characterized in claim 9. The aligning means urge the swivel castors into a position which is suitable for receiving of the swivelling means in the recesses of the pallet as soon as the rolling container is raised and the swivel castors can rotate freely.

Placed on the pallets, the rolling containers can be placed directly onto the loading floor of a truck. Another suitable option is achieved with the measure of claim 12. The guide channels ensure that the rolling containers remain properly in place and also ensure that they cannot shift in transverse direction when the loading space of the truck is not wholly filled.

The measure of claim 13 is herein applied in favourable manner. The rolling containers placed in the guide channels are secured using the blocking means.

A suitable construction is herein characterized in claim 14.

The invention will be further elucidated in the following description with reference to the annexed figures.
- Figure 1: shows in partly broken away perspective view an embodiment of a transport system according to the invention.
- Figure 2: shows a perspective view of a pallet used in the system of fig. 1.
- Figure 3: shows a perspective bottom view of the pallet of fig. 2.
- Figure 4: shows a view as according to IV-IV in fig. 1.
- Figure 5: shows a partly broken away perspective view of a swivel castor of a rolling container during placing on a pallet.

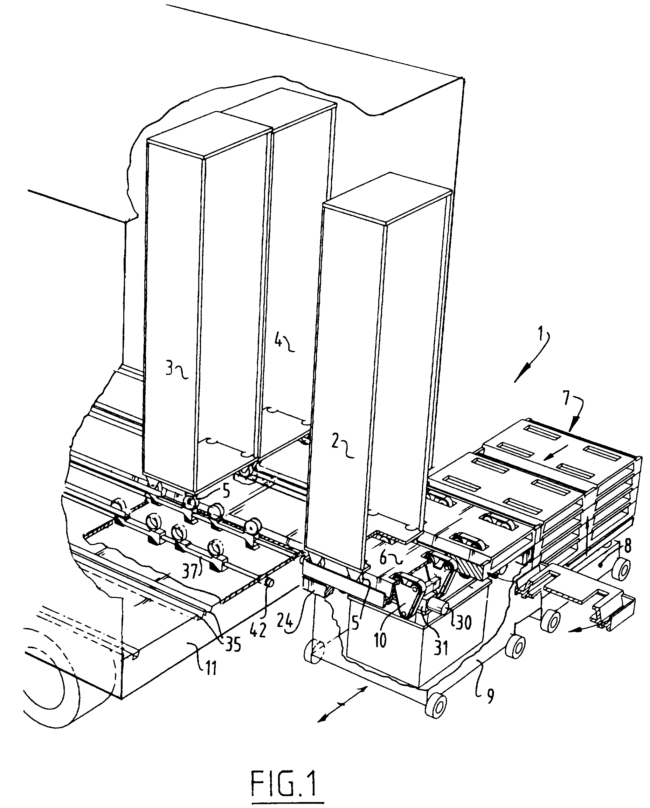

The transport system shown generally in fig. 1 enables transport of goods in efficient manner with rolling containers, three of which are shown in the figure with the respective reference numerals 2, 3 and 4. Each rolling container 2, 3, 4 is provided with four wheels 5, of which for instance two can be rigid castors and two swivel castors in known manner.

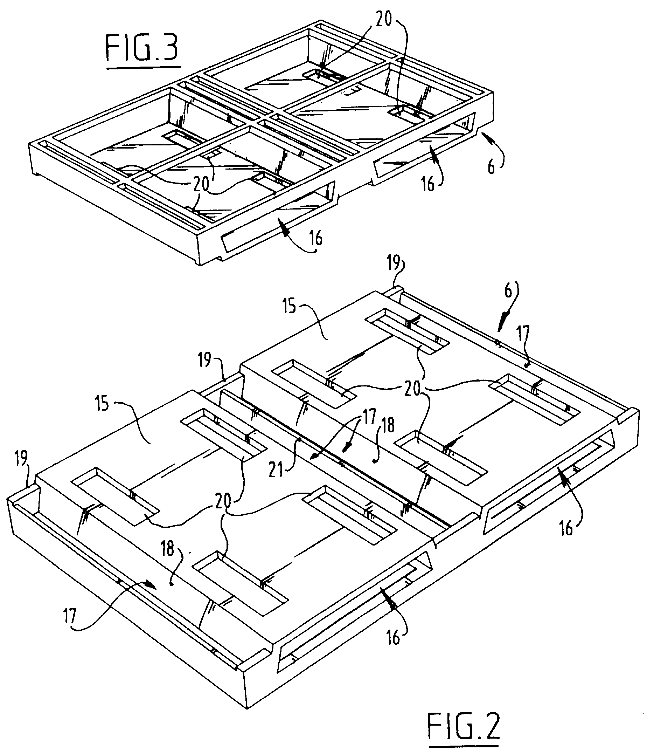

The goods for transporting can be transported in the rolling containers on the production site or on the company premises where the goods must eventually be sold or processed. For transport of the goods from the one location to the other and for storage, the rolling containers 2 are disposed on pallets 6. The preferred embodiment depicted in fig. 2 shows an integrally manufactured pallet 6, for instance of plastic. It can be seen that the pallet comprises two openings 16 at the front for insertion therein of forks of a fork-lift truck. The pallet comprises arched parts 15 which connect onto these openings 16 and in which are recessed openings 20 for passage in vertical direction of parts of displacing means to be described below. Adjoining the arched parts 15 guide channels 17 are formed in pallet 6 which serve as recesses for receiving wheels 5 of the rolling containers. On the ends the guide channels 17 are closed in each case with end walls 19 which form blocking means for wheels 5.

The walls 18 of channels 17 defined by arches 15 extend at an angle downward so that channels 17 taper in downward direction. When a rolling container is placed in downward direction onto pallet 6, the swivel castors will be aligned hereby in a manner to be described in further detail.

As fig. 2 shows clearly, two adjoining channels 17 are situated in the middle of pallet 6 which are mutually separated by a ridge 21. The pallet 6 shown in the figures is specifically intended to accommodate four of the shown rolling containers, or optionally two of double length. The length and width of the pallet are in each case double the length and width of a rolling container 2, 3 or 4, so that the circumference of pallet 6 equals the circumference of four rolling containers placed on this pallet 6.

Fig. 1 shows how a rolling container 2 is placed with its wheels 5 in the channels 17 of pallet 6. For the sake of clarity only one of the possible four containers is shown on pallet 6. A pallet filled with rolling containers can be displaced in usual manner using a fork-lift truck, wherein the forks of this fork-lift truck are placed through openings 16 in pallet 6. During loading of a truck 11 the pallets 6 filled with rolling containers are placed on a lifting device 9 which lifts the rolling containers from pallet 6 and places them in truck 11. The emptied pallets can then be stored temporarily on a wagon 7 coupled to lifting device 9.

In reverse sequence, during unloading of truck 11, the rolling containers 2 are transferred by means of lifting device 9 from truck 11 onto pallets 6, which are subsequently carried away with a fork-lift truck. Each time a filled pallet is removed, empty pallets are placed on device 9 from the supply stack 7 on wagon 8. This wagon 8 can be provided in suitable manner with lifting means which function such that a topmost pallet 7 is held each time at the level of the top of lifting device 9 so that these pallets 7 can be supplied in simple manner.

Within the scope of the invention displacing means of the transport system are formed by all means with which pallets and/or rolling containers can be displaced. A fork-lift truck and truck 11 thus form displacing means of the system according to the invention.

Lifting device 9 also forms part of the displacing means. As noted above, with these displacing means 10 individual rolling containers are moved off or onto pallet 6.

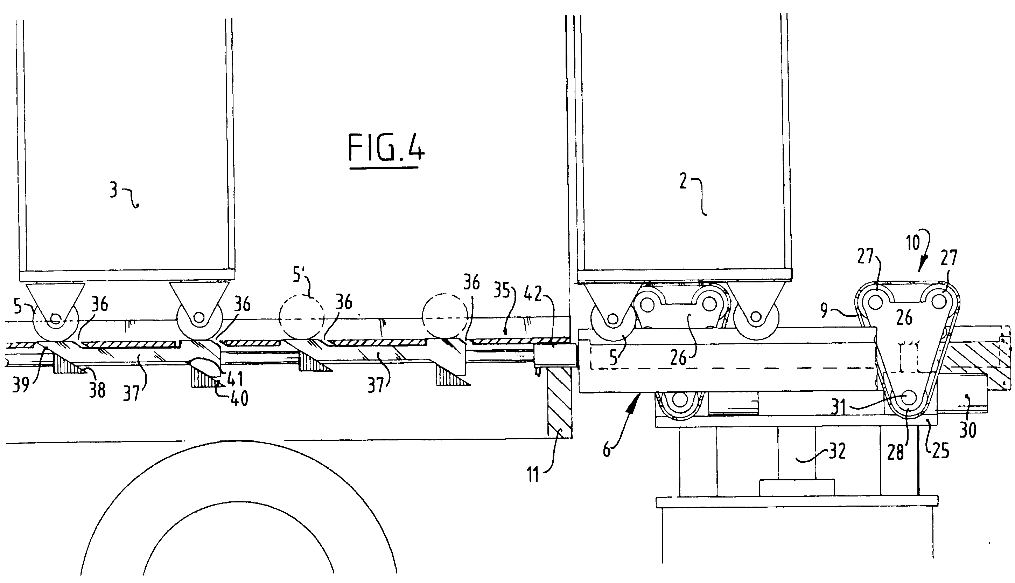

Fig. 4 shows the operation in more detail. The device comprises a vertically movable frame 25 on which are mounted four carriers 26, each comprising two conveyor belt units placed adjacently at a mutual distance. The conveyor belt units are arranged at positions corresponding with the positions of the holes 20 in a pallet 6. When a pallet 6 is placed on the device the conveyor belt units can therefore be carried upward through openings 20.

Each conveyor belt unit comprises two free-running wheels 27 and a driven wheel 28 round which is arranged a conveyor belt 29. The driven wheel 28 is arranged on an end of an output shaft of a drive gear 31 which comprises a motor 30. As shown in fig. 1, two mutually adjacent conveyor belt units are driven by one and the same drive gear 31. The shaft on which wheels 28 are mounted is one continuous shaft of drive gear 31.

The frame 25 with the eight conveyor belt units thereon can be moved vertically up and downward by a lifting cylinder 32 which is not shown in detail.

The operation of displacing means 10 is as follows. A pallet 6 is placed on the fixed frame of lifting device 9. By setting lifting cylinder 32 into operation the eight conveyor belt units are then moved upward through the openings 20 of the pallet. Each pair of mutually adjacent conveyor belt units can in this way engage the underside of a rolling container 2 situated thereabove. By setting motor 30 into operation the conveyor belt 29 of the associated conveyor belt unit is set into operation and rolling container 2 is thus displaced relative to pallet 6. In fig. 4 the motor 30 can be switched on in a direction during loading of truck 11 such that the conveyor belt displaces rolling container 2 to the left. Lifting device 9 is pre-positioned relative to the loading floor of truck 11 such that the guide channels in pallet 6 are situated in line with guide channels 35 in the loading floor of truck 11. When conveyor belt 29 is set into operation in the described manner the wheels 45 of rolling container 2 are thus moved into the relevant guide channels 35, whereafter rolling container 2, guided by guide channels 35, can be moved further over the loading floor to the desired position. Unloading of truck 11 takes place in reverse sequence. A rolling container 2, guided by channels 35, is moved backward from the loading floor and picked up by displacing means 10. These move the container further rearward to the desired position on pallet 6. The pallet 6 thus filled with rolling containers can then be carried away with a fork-lift truck.

Arranged in guide channels 35 of truck 11 are blocking means which ensure that the containers cannot shift during travel of the truck 11. In the shown embodiment these blocking means are formed by recesses 36 in the bottom of guide channel 35 at mutual distances corresponding with the mutual distance of the wheels of the rolling containers.

Situated under these recesses 36 are wedge elements 37 which can be moved obliquely upward between the position shown in fig. 4, in which they fill recesses 36, and a position moved obliquely to the right and downward, in which they leave openings 36 clear. In the shown situation the wheels of the rolling containers can therefore be displaced through channel 35. As soon as the containers have been moved to the intended position, all wedge elements 37 can be moved into a second position using a hydraulic cylinder 42, whereby openings 36 are left clear and the containers drop downward a short distance, wherein the wheels are blocked in openings 36.

In fig. 1 the container 4 is shown in the situation where it is blocked on the loading floor, while container 3 can be displaced freely through channels 35. In order to effect the oblique downward movement of wedge elements 37, these are provided with inclining surfaces 38, 40 which co-act with inclining surfaces 39. 41 fixedly connected to truck 11. It will be apparent that with a movement to the right the wedge elements 37 move obliquely downward and with a movement to the left they move obliquely upward.

During displacing of a rolling container 2 from the pallet into the channels 35 of the loading floor and vice versa, swivel castors of the rolling container will generally cause no problem. However, in those cases where the rolling containers are supplied in a different manner, wherein the swivel castors may lie at an angle to, or in particular transversely of the direction of the channels, it is recommended to arrange aligning means for the swivel castors which urge these castors into a predetermined position, i.e. particularly in a direction such that they can be received precisely in the guide channels on the pallet.

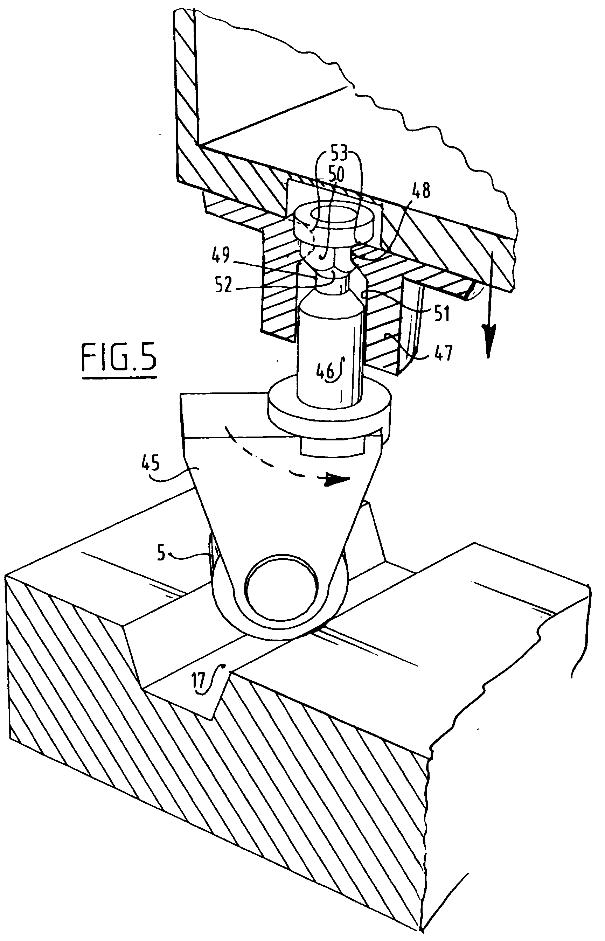

This can be achieved in self-evident manner using springs. Another embodiment of the aligning means is shown in fig. 5.

Swivel castor 5 is herein mounted for vertical displacement in the frame 47 of a container. Connected to wheel carrier 45 is a shaft 46 which protrudes into a bearing bore in this frame 47. Connecting to the top end of shaft 46 via a neck 49 is a curve part 50 which in this case has a square cross-section with surfaces 52 tapering toward neck 49. Connecting to the top of bearing bore 51 is a square hole 48 likewise having tapering surfaces 53.

When the container on wheels 5 stands on the ground the swivel castor 5 will remain pressed upward, wherein neck 49 is situated at the height of the square hole 48. Swivel castor 5 can in this case therefore swivel freely on its vertical swivel axis.

When the container is now lifted, wheel 5 drops downward under the influence of its own weight, wherein the inclining surfaces 52 in co-action with the inclining surfaces 53 ensure that curve part 50 drops into one of four possible positions in square hole 48. The carrier 45 of the swivel castor will thus always come to lie at 45° to the channel 17. When the container with the swivel castors in the thus fixed position is now placed on the pallet, wherein castors 5 are once again pressed upward, castor 5 will be automatically aligned in channel 17 such that its rotation axis will extend transversely of this channel 17.

The invention is not limited to the embodiment of the transport system shown in the figures and described above. What is important is that the goods for transporting are accommodated in rolling containers for an easy displacement in a building or over the floor of a truck or the like, but that the goods in the rolling containers, positioned on pallets, can be displaced as palletized goods when this, in view of the conditions, is the optimal transport method.

The term "rolling container" as used in the present application is not intended limitatively. Any container or carrier provided with wheels or rollers can be used with the present invention.

The elucidated displacing means provide only a possible embodiment. A truck for use within the scope of the present invention can thus be embodied in many different ways. An active transport system can for instance be arranged in a truck, with which system the rolling containers can be moved forward from the loading opening. A suitable option is for instance a number of conveyor belts which are arranged in the lengthwise direction of the truck on the loading floor and which are height-adjustable and can engage on the bottom of the rolling containers. The device can herein be dimensioned such that the belt can slip relative to the rolling containers when the containers have been moved into their end position, i.e. against stops or preceding containers. After loading of the rolling containers this transporting device is stopped and also serves as blocking means ensuring that the containers remain in position.

## Claims

1. System for transporting goods comprising pallets and displacing means for the pallets, wherein each pallet is provided with continuous openings for the vertical passage of parts of the displacing means, **characterized in that** the system further comprises a number of rolling containers provided with wheels, the displacing means can co-act with these rolling containers and the pallets comprise recesses for receiving rolling container wheels.

2. System as claimed in claim 1, wherein the recesses are formed by guide channels.

3. System as claimed in claim 2, wherein the guide channels are provided with wheel blocking elements.

4. System as claimed in claims 2 and 3, wherein the wheel blocking elements are formed by upright parts on the ends of the guide channels.

5. System as claimed in claim 2, wherein guide channels are defined by arched parts of the pallet for the insertion of loading forks.

6. System as claimed in claim 5, wherein guide channels are formed between the arched parts and ridges extending substantially parallel thereto.

7. System as claimed in any of the foregoing claims, wherein the length and width of a pallet each correspond with a whole number of times the length respectively the width of a rolling container.

8. System as claimed in any of the foregoing claims, wherein the rolling containers are provided with a number of swivel castors and the recesses for receiving the rolling container wheels taper downward in order to align the swivel castors.

9. System as claimed in any of the foregoing claims, wherein the rolling containers are provided with a number of swivel castors and aligning means are arranged to urge the swivel castors into a predetermined position.

10. System as claimed in claim 9, wherein each swivel castor is mounted for vertical displacement and co-acts with curve means which, during downward displacement of the swivel castor, come into engagement for rotating thereof into a predetermined position.

11. System as claimed in claim 9, wherein the aligning means comprise resilient means.

12. System as claimed in any of the foregoing claims, wherein the displacing means comprise a truck with a loading floor in which guide channels are arranged for receiving rolling container wheels.

13. System as claimed in claim 12, wherein the loading floor is provided with blocking means for blocking the rolling container wheels.

14. System as claimed in claim 13, wherein the blocking means are formed by recesses in the bottom of the guide channels for passage of rolling container wheels and wherein closing means are present for closing the recesses.

15. System as claimed in claim 14, wherein the closing means comprise wedge means displaceable under the guide channels in longitudinal direction thereof and provided with an upward inclining surface.
